# EUROPEAN PATENT SPECIFICATION

(11) **EP 2 774 019 B1**
(45) Date of publication and mention of the grant of the patent: **12.02.2020**
(21) Application number: 12845852.8
(22) Date of filing: 31.10.2012
(51) Int. Cl.: G06F 1/32, G06F 3/048, G06F 3/0488, G06F 1/16, H04M 1/67, H04M 1/725, H04M 19/04, G06F 3/0346, G06F 1/3231

(54) **ELECTRONIC DEVICE MODE, ASSOCIATED APPARATUS AND METHODS**
MODUS FÜR EINE ELEKTRONISCHE VORRICHTUNG , ZUGEHÖRIGE VORRICHTUNG UND VERFAHREN
MODE DE FONCTIONNEMENT D'UN DISPOSITIF ÉLECTRONIQUE, APPAREIL ET PROCÉDÉS ASSOCIÉS

(30) Priority: 31.10.2011 US 201113285751
(43) Date of publication of application: 10.09.2014
(73) Proprietor: Nokia Technologies Oy, 02610 Espoo (FI)
(72) Inventor: NEWMAN, John-Rhys, Woodland Hills California 91364 (US); WEVER, Pascal, Los Angeles California 90065 (US); PAGLIA, Marco, San Francisco California 94102 (US); BURNS, Duncan, Santa Monica California 90401 (US); BLEECKER, Julian, Los Angeles California 90027 (US); ZUKERMAN, Jacob, San Francisco California 94108 (US)
(74) Representative: Potter Clarkson
(86) International application number: PCT/IB2012/056066
(87) International publication number: WO 2013/065004

(56) References cited:
- EP-A2- 2 144 148
- EP-A2- 2 144 148
- WO-A1-2006/032721
- US-A1- 2007 300 140
- US-A1- 2010 146 384

## Description

### Technical Field

The present disclosure relates to the field of portable electronic device modes, associated methods, computer programs and apparatus. Certain disclosed aspects/embodiments relate to portable electronic devices, in particular, so-called hand-portable electronic devices which may be hand-held in use (although they may be placed in a cradle in use). Such hand-portable electronic devices include so-called Personal Digital Assistants (PDAs) and tablet PCs.

The portable electronic devices/apparatus according to one or more disclosed aspects/embodiments may provide one or more audio/text/video communication functions (e.g. tele-communication, video-communication, and/or text transmission (Short Message Service (SMS)/ Multimedia Message Service (MMS)/e-mailing) functions), interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture function (e.g. using a (e.g. in-built) digital camera), and gaming functions.

### Background

Portable electronic devices may enable one or more applications to be opened on the device. Generally, an application allows the user to access functionality of the portable electronic device (e.g. use an e-mail application to write a message for transmittal, identify location-related information, connect to another device) or to access information (e.g. use a web browser to read a news website) using the device. When a device is in a fully active mode, the full range of functionality and information provided by one or more of the application(s) are generally available to the user, unless there are additional security restrictions associated with a particular application, such as a parental lock. Even if this is the case, the user would at least be able to attempt to access the application, or be presented with some information relating to the application they are attempting to access. If multiple applications are used, a significant amount of processor activity and/or power is usually required. Under such a fully active mode therefore, there would not be a restriction on processor activity and/or power usage so that the user can access multiple applications.

In order to lower processor activity and/or power consumption (e.g. to extend battery life) the user may turn off the portable electronic device, or enter a mode wherein user interaction with the portable electronic device is prevented and functionality is disabled (other than allowing the user to return the portable electronic device to the active mode). This mode can also lock inadvertent input by a user from accidentally activating functionality.

US 2007/300140 discloses an electronic device including a display, a first user input, for enabling access to a plurality of functions, a second user input, and a controller, operable, in response to an input, to change the mode of operation of the device from a first, active mode of operation, in which the controller is operable to enable a user access to a plurality of functions, to a second, restricted mode of operation in which the controller is operable to disable user access to the plurality of functions, and operable, in response to an input via the second user input, to change the mode of operation of the device from the second, restricted mode of operation to a third, restricted mode of operation in which the controller is operable to disable user access to the plurality of functions and is operable to present information not presentable in the second restricted mode of operation.

US 2010/146384 discloses providing content and/or functionality through a display of a locked computing device. Configuration data defined by a user or application vendor identifies the content and/or functionality to be made available. Upon receipt of the content, the computing device modifies the received content based on the configuration data and provides the modified content to the user through the display of the locked computing device. The computing device also interacts with the user in accordance with the functionality identified by the configuration data. In some embodiments, notifications about voice mail or electronic mail messages are displayed to the user through a locked touch screen display. Responsive to a finger tap or other user input, additional yet limited information relating to the notifications is displayed.

The listing or discussion of a prior-published document or any background in this specification should not necessarily be taken as an acknowledgement that the document or background is part of the state of the art or is common general knowledge. One or more aspects/embodiments of the present disclosure may or may not address one or more of the background issues.

### SUMMARY

In a first aspect, there is provided an apparatus comprising:
at least one processor; and
at least one memory including computer program code,the at least one memory and the computer program code configured to, with the at least one processor, cause the apparatus to perform at least the following:
   provide a first mode of operation for a portable electronic device, the first mode configured to allow general unlocked user interaction with the user interface of the portable electronic device, the first mode associated with allowing for the availability of one or more of a first level of power consumption and processor activity for the portable electronic device;
   provide a second mode of operation for the portable electronic device, the second mode configured to allow locked user interaction with the user interface of the portable so electronic device, the second mode associated with allowing for the availability of one or more of a second level of power consumption or processor activity for the portable electronic device; and
   wherein the locked user interaction of the second mode of operation allows for the user to provide one or more specific limited user inputs to the portable electronic device using the user interface of the portable electronic device, to directly interact with associated second mode output provided using the user interface in the second mode of operation, the one or more specific limited user inputs not being associated with general unlocking of portable electronic device to enter the first mode of operation.

A mode of operation of the portable electronic device may be considered to be an operational state of the portable electronic device. For example, the mode of operation may dictate the applications available, the hardware (e.g. keypad, memory, transmitter) which is enabled or disabled, the functionality available (e.g. transmission of data may be enabled in a first mode but not in a second mode), the information available, how the information is presented, and/or how the user can interact with the portable electronic device (e.g. whether an aspect of the user interface, such as a keyboard, is enabled, disabled and/or configured to respond in a different way to the same input). That is, the mode of operation may define the behaviour (e.g. default behaviour) and/or capabilities of the portable electronic device (and possible applications running on the portable electronic device). The mode of operation may dictate what information is supplied to the user and/or the functions available to the user.

The second mode may be a user-defined mode of operation (e.g. a mode of operation with user-saved preferences). The mode of operation of the portable electronic device when an application is running in may dictate the behaviour of the application.

The apparatus may be configured to provide an indication of an event associated with second mode output, the occurrence of the event triggering the availability in the second mode of allowing one or more specific limited user inputs associated with the second mode output to allow a user to view and/or interact with the second mode output. For example, while operating in the second mode, the device may provide an indication of an event, such as displaying an icon or vibrating to indicate receipt of a message from a third party, or sounding a reminder alarm that a calendar entry is due to occur. The occurrence of the event (e.g. receipt of the message) then triggers the availability in the second mode of allowing one or more specific limited user inputs, such as tapping or sliding an icon on screen, or flipping the device over. Such a specific limited user input is associated with the second mode output in that the user may, after providing the input, view the second mode output e.g. the message or calendar entry associated with the event indication, in the second mode. Further specific limited user inputs may then allow for further interaction with the second mode output in the second mode.

The apparatus may be configured to, in the second mode, enable display of abbreviated second mode output in response to a said specific limited user input, abbreviated second mode output being an abbreviated version of output available in the first mode. For example, in the case of a map application, just a portion of the information available in the first mode (which may be a zoomable map of a city where a route may be planned according to several criteria) would be available in the second mode (such as only a small non-zoomable portion of the same map, with no route planning capability). Second mode output may be, for example, one or more of: visual output; tactile output; or audio output.

The associated second mode output of the selected second mode application may comprise abbreviated output, abbreviated output being an abbreviated version of output available for the selected second mode application when in the first mode. An abbreviated version may be considered to be a reduced version, and/or a redacted version.

The abbreviated second mode output may comprise one or more of:
a subject of a textual message;
a first line of a textual message;
part of a textual message;
information identifying the sender of a textual message;
an image;
a button, symbol or icon;
a news headline;
a direction indicator; and
a location indicator.

The abbreviated second mode output content may comprise one or more of information received from a third party, media information, and scheduled information.

Information received from a third party may comprise one or more of the name of the third party, a title, contact information of the third party, an avatar, a photograph of the third party, photographic content, image content, text content, audio content, a hashtag or a hyperlink.

A received message from a third party may comprise one or more of an SMS, an MMS, a photo message, an image-based message, a video message, an audio message, a social media website-based message, a micro-messaging based message, a web-site based message, a message associated with trading, a website forum-based message, or a hyperlink.

For example, the user may receive a message from a third party such as an RSS news feed subscribed to by the user, a posting on an internet forum, a microblogging entry on a site such as Twitter, a friends updated entry on a social networking site such as Facebook, or an updated status from an external website such as a traffic monitoring website, a weather information website, travel information from an airport's website, or other such third party transmitting updates to users.

The scheduled information may comprise one or more of a calendar entry, an alarm, a scheduled software update, a scheduled anti-virus update, a time and date based scheduled update, or other scheduled information. The scheduled information may be related to an event already stored on the apparatus.

Media information includes information and content relating to, for example, an e-book or other electronic document configured to be read using the device, and songs, music, soundtracks, other audio media, videos, movies, and other visual media configured to be listened to and watched using the device.

The specific limited user input may be limited with respect to the general range of user input available in the first mode. That is, the user input available in the second mode may be a subset of the user input available in the first mode. In this way, the locked user interaction may be limited with respect to the general unlocked user interaction.

The locked user interaction available in the second mode of operation may be limited with respect to the general unlocked user interaction available in the first mode of operation. The locked user interaction may be a subset of the general unlocked user interaction. The general unlocked interaction may enable the user to interact with all of the applications of the device. The general unlocked interaction may enable the user to access all of the functionality of the device. The locked interaction may prevent the user, in the second mode, from accessing certain applications/functionality (which may be available in the first mode of operation).

For example, an example embodiment may have a keyboard user interface and a joystick user interface, wherein in the first mode the user can provide input via both the keyboard user interface and a joystick user interface whereas in the second mode the user can provide input only via the joystick user interface (or even the range of input detectable by the keyboard and/or joystick may be limited in the second mode).

As a further example, in the first mode, a user may be able to access all the features of a textual messaging service, such as inputting textual characters, formatting the inputted characters by changing the font, colour, or size, attaching a photograph, attaching a video file, attaching an audio file, inputting different recipients, or inputting other information related to the textual message to be sent. In the second mode, the specific limited user input allowed may be limited to inputting textual characters of a predetermined font, colour and size only.

The second mode output may be a low power output with respect to the output available in the first mode of operation.

The second level of the one or more of power consumption and processor activity may be lower than the first level of the one or more of power consumption and processor activity for the portable electronic apparatus.

The second mode of operation may allow for the user to provide specific limited user input to the portable electronic device using the user interface of the portable electronic device, to directly interact with associated output provided using the user interface in the second mode of operation, whilst keeping the portable electronic device in the second mode.

The apparatus may be configured to provide a third mode of operation for the portable electronic device, the third mode associated with allowing for the availability of one or more of a third level of power consumption or processor activity for the portable electronic device, the third level of one or more of power consumption and processor activity being lower than the second level.

The apparatus may be configured, when in the third mode, to disable user interaction with one or more applications configured to run on the apparatus but allow the user to unlock the portable electronic device to enter the first mode of operation.

The apparatus may be configured to run in the third mode, wherein the third mode may provide for a sleep mode in which user input in response to associated output cannot be provided without entering at least one of the first or second modes.

The locked user interactions of the second mode may be locked with respect to the availability of one or more of the power source, processor and functionality of the user interface.

The apparatus may be configured to allow a user interaction to move from the third mode to the second mode in response to an event.

An event may comprise one or more of receipt of a message from a third party or a scheduled event.

A specific limited user input may comprise a combination of one or more of:
tilting the device;
moving the device to a new location;
interacting with a touch screen;
pressing a touch screen;
hovering over a touch screen;
touching a particular region of the touch screen;
pressing a key;
swiping on the touch screen;
bending the device;
squeezing the device; and
an audio signal.

The location of the device may be a geographical location. The audio signal may be a spoken message inputted by the user, for example in order to create a message to send to a third party. If the apparatus is configured to operate using voice recognition, an audio signal may be inputted to accept a call from a third party.

The apparatus may be at least one of a portable electronic device, circuitry for a portable electronic device, a pocket computer, a laptop computer, a desktop computer, a tablet computer, a mobile phone, a Smartphone, a monitor, a display, a personal digital assistant, a watch, a digital camera, or a module for the same.

The apparatus/portable electronic device may comprise a display, and the display may comprise a combination of one or more of an AMOLED (active-matrix organic light-emitting diode), an e-Ink display and a LCD (liquid crystal display). For example, a display may comprise an underlying e-Ink screen, and an LCD on top, wherein the LCD may be configured to be transparent or translucent when the e-Ink screen is in use. When in the second mode, the display may be configured such that it uses less power (e.g. by reducing the colour and/or brightness, and/or changing the colour scheme of the display). For example, a Quarter Video Graphics Array OLED display may consume 3 watts while showing black text on a white background, but only 0.7 watts showing white text on a black background. That is, changing the mode of operation of the portable electronic device may comprise changing the mode of a display of the portable electronic device.

The user interface may comprise a combination of one or more of a wand, a pointing stick, a touchpad, a touch-screen, a stylus and pad, a mouse, a physical keyboard, a virtual keyboard, a joystick, a remote controller, a button, a microphone, a motion detector, a position detector, a scriber and an accelerometer.

One or more of the second level of power consumption and processor activity for the portable electronic device may be temporarily higher than the first level of power consumption and processor activity for the portable electronic device during processing and/or performance of the specific limited user input and/or the function/task associated with the specific limited user input.

Memory may comprise one or more of, for example, a CD, a DVD, flash memory, a floppy disk, a hard disk, volatile memory, non-volatile memory, and Random Access Memory.

The apparatus may be connected/connectable to a network. The network may be, for example, the internet, a mobile phone network, a wireless network, LAN or Ethernet. The apparatus may comprise a transmitter and or receiver to interact with a network. The transmitter/receiver may comprise, for example, an antenna, an Ethernet port, a LAN connection, a USB port, a radio antenna, Bluetooth connector, infrared port, or fibre optic d etector/transm itter.

It will be appreciated that the second mode may not be an aeroplane or flight mode (e.g. where antenna transmitting and receiving functions are suspended). It will be appreciated that the second mode may not be a low battery mode, the low battery mode being activated in response to detecting that the battery level is below a predetermined threshold. It will be appreciated that the apparatus/portable electronic device may be configured to provide a flight mode and/or a low battery mode in addition to the second mode of operation.

In a second aspect, there is provided a method, the method comprising:
providing/using a first mode of operation for a portable electronic device, the first mode configured to allow general unlocked user interaction with the user interface of the portable electronic device, the first mode associated with allowing for the availability of one or more of a first level of power consumption and processor activity for the portable electronic device;
providing/using a second mode of operation for the portable electronic device, the second mode configured to allow locked user interaction with the user interface of the portable electronic device, the second mode associated with allowing for the availability of one or more of a second level of power consumption or processor activity for the portable electronic device; and
wherein the locked user interaction of the second mode of operation allows for the user to provide one or more specific limited user inputs to the portable electronic device using the user interface of the portable electronic device, to directly interact with associated second mode output provided using the user interface in the second mode of operation, the one or more specific limited user inputs not being associated with general unlocking of the portable electronic device to enter the first mode of operation.

In a third aspect, there is provided a computer program comprising computer program code configured to:
provide a first mode of operation for a portable electronic device, the first mode configured to allow general unlocked user interaction with the user interface of the portable electronic device, the first mode associated with allowing for the availability of one or more of a first level of power consumption and processor activity for the portable electronic device;
provide a second mode of operation for the portable electronic device, the second mode configured to allow locked user interaction with the user interface of the portable electronic device, the second mode associated with allowing for the availability of one or more of a second level of power consumption or processor activity for the portable electronic device; and
wherein the locked user interaction of the second mode of operation allows for the user to provide one or more specific limited user inputs to the portable electronic device using the user interface of the portable electronic device, to directly interact with associated second mode output provided using the user interface in the second mode of operation, the one or more specific limited user inputs not being associated with general unlocking of the portable electronic device to enter the first mode of operation.

The computer program may be stored on a storage medium (e.g. on a CD, a DVD, a memory stick or other non-transitory medium). The computer program may be configured to run on a device or apparatus as an application. An application may be run by a device or apparatus via an operating system.

In a fourth aspect, there is provided an apparatus, the apparatus comprising:
first means for providing configured to provide a first mode of operation for a portable electronic device, the first mode configured to allow general unlocked user interaction with the user interface of the portable electronic device, the first mode associated with allowing for the availability of one or more of a first level of power consumption and processor activity for the portable electronic device;
second means for providing configured to provide a second mode of operation for the portable electronic device, the second mode configured to allow locked user interaction with the user interface of the portable electronic device, the second mode associated with allowing for the availability of one or more of a second level of power consumption or processor activity for the portable electronic device; and
wherein the locked user interaction of the second mode of operation allows for the user to provide one or more specific limited user inputs to the portable electronic device using the user interface of the portable electronic device, to directly interact with associated second mode output provided using the user interface in the second mode of operation, the one or more specific limited user inputs not being associated with general unlocking of the portable electronic device to enter the first mode of operation.

The present disclosure includes one or more corresponding aspects, embodiments or features in isolation or in various combinations whether or not specifically stated (including claimed) in that combination or in isolation. Corresponding means for performing one or more of the discussed functions are also within the present disclosure.

Corresponding computer programs for implementing one or more of the methods disclosed are also within the present disclosure and encompassed by one or more of the described embodiments.

The above summary is intended to be merely exemplary and non-limiting. The present invention provides an apparatus according to claim 1, a method according to claim 14 and a computer program product according to claim 15. Further aspects of the invention are outlined in the dependent claims. Embodiments which do not fall within the scope of the claims are to be interpreted as examples useful for understanding the invention.

### BRIEF DESCRIPTION OF THE FIGURES

A description is now given, by way of example only, with reference to the accompanying drawings, in which:
figure 1 illustrates an example embodiment comprising a number of electronic components, including memory, a processor and a communications unit;
figure 2 illustrates an example embodiment comprising a touch-screen;
figures 3a-3b depict an example embodiment showing output received from a third party on a device running an e-mail application, while operating in the first (figure 3a) and second (figure 3b) modes;
figures 4a-4b depict an example embodiment showing output received from a third party on a device running a social networking application, while operating in the first (figure 4a) and second (figure 4b) modes;
figures 5a-5c depict an example embodiment showing a user viewing output received from a third party on a device running a microblogging application, while operating in the second mode;
figures 6a-6c depict an example embodiment showing a user viewing scheduled information on a device running an alarm application, while operating in the second mode;
figures 7a-7c depict an example embodiment showing a user viewing media information on a device running a music application, while operating in the second mode;
figures 8a-8c depict an example embodiment showing a user viewing a received SMS message while operating in the second mode;
figure 9 depicts a flow diagram describing a method used to provide first and second modes of operation of a portable electronic device; and
figure 10 illustrates schematically a computer readable medium providing a program according to an embodiment of the present invention.

### DESCRIPTION OF EXAMPLE ASPECTS/EMBODIMENTS

Other embodiments depicted in the figures have been provided with reference numerals that correspond to similar features of earlier described embodiments. For example, feature number 1 can also correspond to numbers 101, 201, 301 etc. These numbered features may appear in the figures but may not have been directly referred to within the description of these particular embodiments. These have still been provided in the figures to aid understanding of the further embodiments, particularly in relation to the features of similar earlier described embodiments.

It is common for a portable electronic device to have an active first mode (which may or may not be graphically based) to allow a user to generally interact with the portable electronic device and generally access the full functionality of the device. For example, in an active mode, the user may be presented with a wide range of icons and options representing different available applications available for general use. Some electronic devices have a further standby-type or sleep-type mode where the full availability of options is disabled. For these devices the user is either presented, in an active mode, with an interface which allows complete interaction with the device, or the standby-type or sleep-type mode, which inhibits further interaction with the device (but allows for unlocking of the device to enter the general mode). Other phones (e.g. Nokia N8) may allow the user to lock and unlock the device (e.g. by using a slider on the side of the phone or by pressing a sequence of keys). In the unlocked mode the user may have general unlocked access to all applications and/or to the full functionality of the phone. In locked mode, the user may be able to receive a phone call, view a screen saver, but user applications and/or functionality are not available.

Example embodiments contained herein may be considered to provide a way of providing a mode of operation of a portable electronic device with intermediate functionality. For example, a mode of operation with intermediate functionality may allow the user to access desired information directly, without the need for the user to consider which on-screen or menu options he or she may need to select in order to interact with the desired information, for example, to view an internet site or to reply to a received message. Interacting with a portable electronic device using specific limited user inputs to access an intermediate level of functionality may allow for a more intuitive way for a user to interact with a portable electronic device. For example, rather than the user needing to learn how to navigate menu systems for different applications, and needing to use several different interaction gestures to perform desired operations, using specific limited user inputs may help the user access the functionality they wish to have by knowing only a few basic specific limited inputs, such as tilting and rotating the device, or tapping and swiping across the screen to move elements around the screen. Using specific limited user inputs may also provide an advantage to users who are not familiar with, or who have a limited understanding of portable electronic devices. Operating a device using locked user interaction in an intermediate-type operating mode using specific limited user inputs may require a lower level of competence and ability of the user than operating a device allowing general unlocked user interaction.

Example embodiments contained herein may be considered to provide a way of prolonging battery life and reducing processing activity. Such embodiments, for example when a portable electronic device is operating in the intermediate-type mode, may prolong the life of the battery, thus requiring the user to recharge the battery with reduced frequency. Similarly, for example, reduced processing activity may provide the user with applications with increased speed, for example faster updating of information on screen.

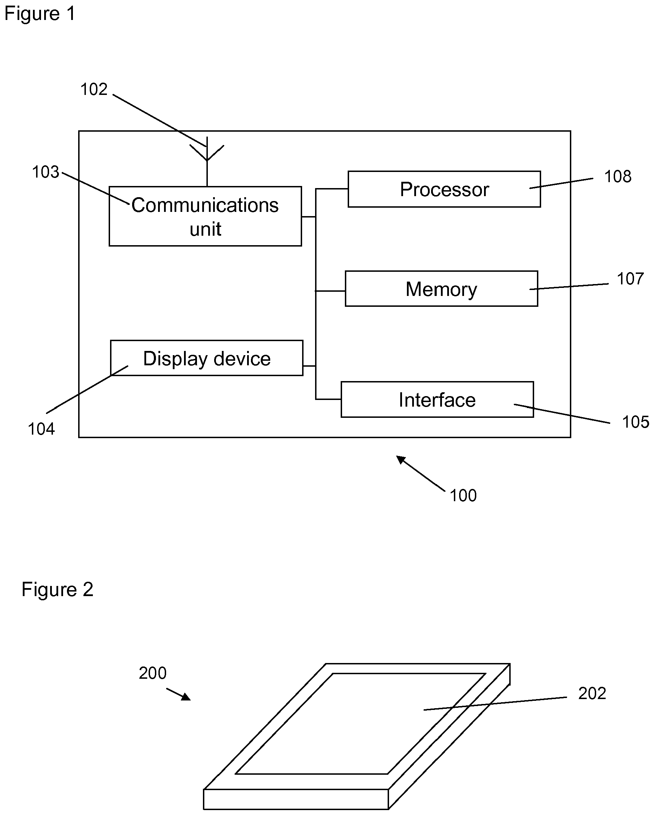

Figure 1 depicts an apparatus (100) of an example embodiment, such as a mobile phone. In other example embodiments, the apparatus (100) may comprise a module for a mobile phone (or PDA or audio/video player), and may just comprise a suitably configured memory (107) and processor (108).

The example embodiment of figure 1, in this case, comprises a display device (104) such as, for example, a Liquid Crystal Display (LCD) or touch-screen user interface. The apparatus (100) of figure 1 is configured such that it may receive, include, and/or otherwise access data. For example, this example embodiment (100) comprises a communications unit (103), such as a receiver, transmitter, and/or transceiver, in communication with an antenna (102) for connecting to a wireless network and/or a port (not shown) for accepting a physical connection to a network, such that data may be received via one or more types of networks. This example embodiment comprises a memory (107) that stores data, possibly after being received via the antenna (102) or port or after being generated at the user interface (105). The processor (108) may receive data from the user interface (105), from the memory (107), or from the communications unit (103). It will be appreciated that, in certain example embodiments, the display device (104) may incorporate the user interface (105). Regardless of the origin of the data, these data may be outputted to a user of apparatus (100) via the display device (104), and/or any other output devices provided with apparatus. The processor (108) may also store the data for later user in the memory (107). The memory (107) may store computer program code and/or applications which may be used to instruct/enable the processor (108) to perform functions (e.g. read, write, delete, edit or process data).

This example embodiment is configured to enable a plurality of modes of operation, the plurality of modes of operation comprising a first mode and a second mode of operation. The first mode of operation is configured to allow general unlocked user interaction with the user interface (105) of the portable electronic device (100), and is associated with allowing for the availability of one or more of a first level of power consumption and processor (108) activity for the portable electronic device.

The second mode is configured to allow locked user interaction with the user interface (105) of the portable electronic device, and is associated with allowing for the availability of one or more of a second level of power consumption or processor (108) activity for the portable electronic device

When changing from the first mode of operation to the second mode of operation, the portable electronic device may, for example, be configured to perform one or more of: changing the mode of the display device to a low power mode (e.g. by lowering the brightness of the screen (104)); changing the colour scheme used to one which requires less power or which may prolong the life of the display pixels or elements; limiting the amount of processing activity available; disabling part of the user interface (105) (e.g. such that a portion of the touch user interface is not configured to respond to user input); limiting the amount of non-persistent memory (107) available (e.g. RAM); disabling predetermined hardware (e.g. transmitter, receiver, communications unit (103)); and enabling running of applications in a second mode.

It will be appreciated that at least some example embodiments may be configured to have different colour schemes in different modes of operation. For example the portable electronic device may be configured to, in a first mode, display (e.g. information such as text, a map or an image) in colour, and, in the second mode, display the same in black and white. It will be appreciated that whilst in the second mode of operation, the portable electronic device may be configured to change the display (e.g. present an animation or change the colours of the pixels). Changing the configuration of a pixel may extend the life of that pixel (e.g. by preventing the continuous display of one colour creating a permanent artefact (e.g. burn-in or image persistence)).

The locked user interaction of the second mode of operation allows for the user to provide one or more (acceptable) specific limited user inputs (e.g. limited compared to the general interaction input available in the first mode) to the portable electronic device using the user interface (105) of the portable electronic device, to directly interact with associated second mode output provided using the user interface (105) in the second mode of operation, the one or more specific limited user inputs not being associated with general unlocking of portable electronic device to enter the first mode of operation.

Figure 2 depicts an example embodiment of the apparatus comprising a portable electronic device (200), e.g. such as a mobile phone, with a user interface comprising a touch-screen user interface (202), a memory (not shown), a processor (not shown) and an antenna (not shown) for transmitting and/or receiving data (e.g. e-mails, textual messages, phone calls, information corresponding to web pages).

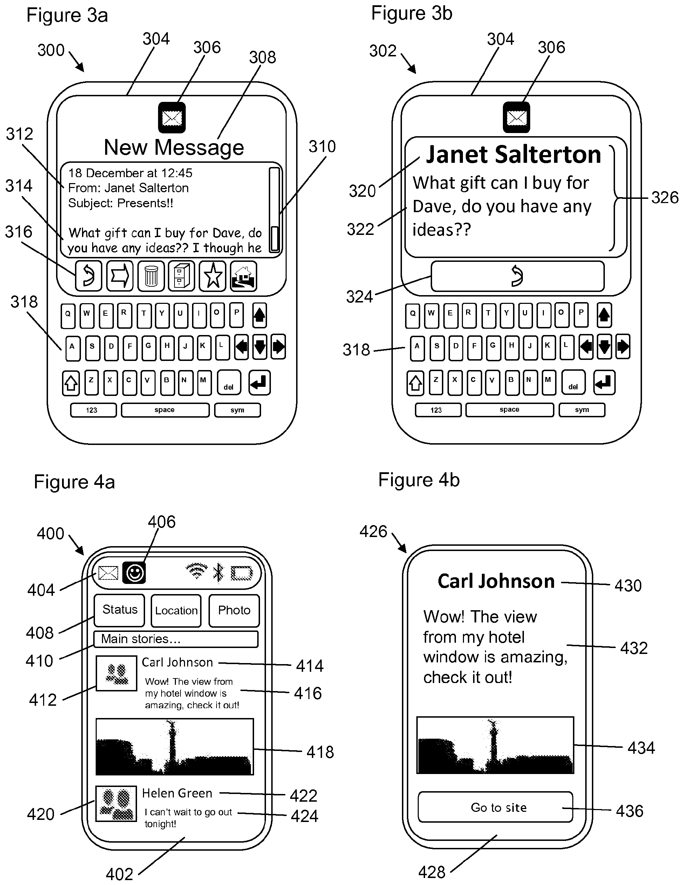

Figures 3a-b illustrate two views of an example embodiment with the portable electronic device (200, 300, 302) in use. Here the portable electronic device may, for example, be a smartphone or a PDA. In figure 3a the device is operating in a first mode (300), and in figure 3b the device is operating in a second mode (302).

Figure 3a shows an e-mail application running on the device operating in a first mode. The device has a user interface comprising a touch-sensitive screen (304) and a physical keyboard (318). The screen (304) in the example is displaying an icon (306) and a message (308) to show that a new message has been received by a third party. The message in this example is an e-mail but other possible examples include SMS, MMS, or fax messages. The message in this example is larger than the size of the screen so a scroll bar (310) is available for the user to scroll down the message and view all of the message content. Details of the third party are displayed (the name of the sender) (312) alongside the date and time at which the message was sent, and the subject of the e-mail. The content of the message in this example is text (314) asking the user what gift they think the sender could buy for a friend, Dave, for Christmas, along with their thoughts for possible gifts and other message content, which the user can read by scrolling down the message using the scroll bar (310). The user has several options available relating to this message (316), for example, they may wish to reply to the message, forward the message to another person, delete the message, archive the message, mark the message as important, or as a favourite message, or for later consideration, or navigate back to the home page. These several options (more may be envisaged), along with the possibility to scroll (310) down the message, comprise ways via which the user may perform general unlocked user interaction with the user interface in the first mode of operation.

Figure 3b shows the e-mail application with the device operating in a second mode. In this mode, the screen (304) in the example also displays an icon (306) to show that information (a new message) has been received by a third party. Display of such an icon may be optional. The message space (326) in this example shows abbreviated second mode output. The output shown in the message space (326) in figure 3b operating in the second mode is abbreviated with respect to the same corresponding message shown in figure 3a operating in the first mode. It will be appreciated that while the example shown in figure 3b shows black text and icons on a white background, the device may be configured, in the second mode, to display white text and icons on a black background in order, for example, to reduce the battery power required in the second mode.

The abbreviated second mode output content (326) in this example shows information received from a third party; namely part of the textual message (322) and information identifying the sender of the textual message (the sender's name (320)). The abbreviated message content (322) and the abbreviated third party information (320) in this example form abbreviated second mode output corresponding to the output available in the first mode.

The details of the third party displayed (320) in this example are the sender's name. It may be envisaged that the third party details displayed are a title, such as the subject of the message (in this example, "Presents!!"), other contact information of the third party such as an e-mail address or telephone number, or a photograph of the third party.

The message content in this example is text content only, but it may be envisaged that the message content displayed in the second mode may be one or more of photographic content, image content, text content, audio content, a hashtag or a hyperlink. For example, the third party may have sent a hyperlink to an online store in the message showing a possible gift to buy for Dave, or the third party may have included a photograph of a gift idea taken in a store while shopping.

Abbreviated message content is displayed (322) in this example, the content being the first sentence of the full message (314). By providing abbreviated output, the user can quickly and easily see important details of the message without having to change the mode of the portable electronic device. The amount of text to be shown on the display (304) in the second mode may be selected based on the font size used, the length of the original message, the first sentence only, the first two (or more) sentences, a particular part of the text (identified for example as containing an address, or a time, or a contact name, or other criteria). In this example, using a specific preset font size, the amount of text displayed corresponds to the amount of text able to fill the message space (326) of the screen without requiring a scroll bar (310) such as that shown in figure 3a.

If the user is happy to reply to the third party message based on this abbreviated message content (322), then they do not need to consider what options are possible as they would do if using the first mode. They only have one option available, to reply (324). The user in this example may perform locked user interaction, limited to the specific limited user input of selecting the "reply" button (324), in order to directly interact with the associated second mode output (the message (322)) and reply to the message by using the user interface (the touch screen (304)) to tap the "reply" button (324).

By only having one button with which to reply (324), the locked user interaction may be considered more intuitive for the user as there is no need to navigate menus or select an appropriate button. It may be envisaged that in the second mode, rather than touching a particular region of the touch screen (the button region (324)), the entire screen may act as one large "reply" button and that the user only has to tap somewhere on the touch screen as their locked user interaction in order to reply to the third party's message.

The user may be able to reply by, for example, reciting a message and recording it, or by typing a text reply. Choosing to reply, composing the reply, and transmitting the reply may all be achieved in the second operating mode without having to exit the second mode.

Figures 4a-b illustrate a series of views of an example embodiment with the portable electronic device (200, 400, 426) is in use. Here the portable electronic device may, for example, be a smartphone, PDA or tablet computer. In figure 4a the device is operating in the first mode (400), and in figure 4b the device is operating in the second mode (426).

Figure 4a shows a social networking application running on the device operating in a first mode. The device has a user interface comprising a touch-sensitive screen (402). The screen (402) in the example is displaying information relating to a user's news feed showing information posted by friends to whom the user is linked on the social networking site. A series of icons (404) are displayed showing the general operation of the device both within and outside of the social networking application, such as any messages received, any social network updates received (406), signal strength, Bluetooth connectivity, and battery power remaining. A series of buttons (408) are displayed relating to possible operations which may be made within the social networking application, in this example "Status", "Location" and "Photo" buttons are available which allow the user to perform various operations in the application, i.e. which allow general unlocked user interaction. A banner stating what sort of content in the social networking application the user is viewing is included (410); in this case it is stating "Main stories..." to indicate that the user is viewing stories which have been considered to be "main", perhaps by the number of times they have been viewed, or due to the time at which they were posted.

In this case the user has received notification (406) that a new message has been posted by a friend on the social networking site. That is to say, information has been received by a third party. The notification (406) may comprise one or more of an icon being displayed, a vibration signal, an audio signal, or other notification.

The new message in this example includes an avatar of the third party (412), the third party's name (414) Carl Johnson, the message posted by the third party (416) and a photograph (418). It may be envisaged that other information relating to the message are displayed as well, such as the time at which the post was made, or the location from which the post was made. The photograph displayed may be one of several photographs posted by the third party, which may for example be viewed by clicking on, or selecting, the photograph (418). One photograph (418) is shown as an example but a plurality of photographs may be displayed together on screen. This new message has been received after that of another friend, Helen Green (422), which is also displayed on the newsfeed-type screen of the social networking application. This other contact has posted a message, shown on the screen in this example as their avatar (420), name (422), and a textual message (424).

The user has several options available relating to this displayed screen. For example, they may wish to have a closer look at the photograph posted by Carl Johnson, and therefore the user can click on the photograph (418). The user may wish to look at other posts which Carl Johnson has made, so the user can click or touch the name (414) to view this third party's profile. The user may wish to post their own photo and so they can select the "photo" option in the buttons (408). Several other interactions are possible and comprise general unlocked user interaction with the user interface in the first mode of operation.

Figure 4b shows the social networking application running on the device operating in a second mode (426). The user may not have been able to view this second mode output until an indication that an event was received, such as an alert that a friend has updated his new feed or status on the site. Receipt of an indication of an event occurring triggers the availability of, in the second mode, allowing the user to provide one or more specific limited user inputs (e.g. physically moving the device) to view the content shown in figure 4b. Further specific limited user inputs may then be provided to further interact with the device in the second mode as will be explained below.

The second mode is configured to allow locked user interaction with the user interface of the portable electronic device, and is associated with allowing for the availability of one or more of a second level of power consumption or processor activity for the portable electronic device. In this second mode, the screen (428) in the example shows abbreviated second mode output, which is abbreviated with respect to the corresponding message shown in figure 3a (412, 414, 416, 418) operating in the first mode for which the user received a notification. It will be appreciated that while the example shown in figure 3b shows black text, buttons and icons on a white background, the device may be configured, in the second mode, to display white text, buttons and icons on a black background in order to, for example, reduce the battery power required in the second mode.

It may be the case, for example, that the screen is placed in a low power mode by configuring the pixels corresponding to the background to be turned off (making them black) and configuring the pixels corresponding to text and user interface elements to be white. This reduces the power consumption of the screen whilst the portable electronic device is in the second mode. It will be appreciated that other example embodiments may be configured to turn all or portions of a screen into a low power mode (e.g. by turning off a backlight, reducing the contrast, selecting colour schemes which reduce power). Such forms of output can be considered to be low power output. Available power consumption and/or processor activity is also restricted by reducing the number of applications which are available to be accessed/run in the second mode.

The abbreviated second mode output content in this example shows information received from a third party; namely information identifying the sender of the message (the sender's name Carl Johnson (430)), the textual message (432) and a photograph (434). The abbreviated second mode output corresponds to the output available in the first mode.

The details of the third party displayed (430) in this example are the sender's name. It may be envisaged that the third party details comprise a title, such as the subject of a message, other contact information of the third party such as an e-mail address, online user name, telephone number, or a photograph of the third party.

The message content in this example is text content (432) and image content, the photograph (434). It may be envisaged that the message content could include other image content such as a cartoon, audio content such as a song or audio recording, video content such as a home movie, or a hyperlink, for example to a news story of interest or to a fansite.

The content of the message in this example is text (432) from the third party alongside a photograph (434). If the user would like to interact with the application, in the second mode in this example further locked user interaction is possible, that is, they may then select the "Go to site" button in order to directly interact with the associated second mode output (for example, to comment on the third party's message (432), or view the photograph in more detail (434)). In this example, selecting the "Go to site" option by performing a further specific limited user input, such as a tap on the particular region of the touch screen corresponding to the button (436), would take the user out of the second mode and into the first mode to view and be able to access content as in the first mode, as shown in figure 4a. Alternatively, the user may be happy to have viewed the abbreviated content, for example as shown in figure 4b, and the user may simply put down the portable electronic device and not interact further with it at this stage. After a predetermined period of time, the possibility to directly interact with the second mode output may be eliminated. The device may then change to operating in a third mode or a standby-type mode.

It will be appreciated that other example embodiments may have further modes of operation in addition to the first and second modes of operation. For example, an example embodiment may have a third mode wherein all of the user interactions with the portable electronic device are disabled except those which enable the portable electronic device to be changed from the third mode into another mode (e.g. the first mode or the second mode). The third mode may be considered to be a simple background sleep mode.

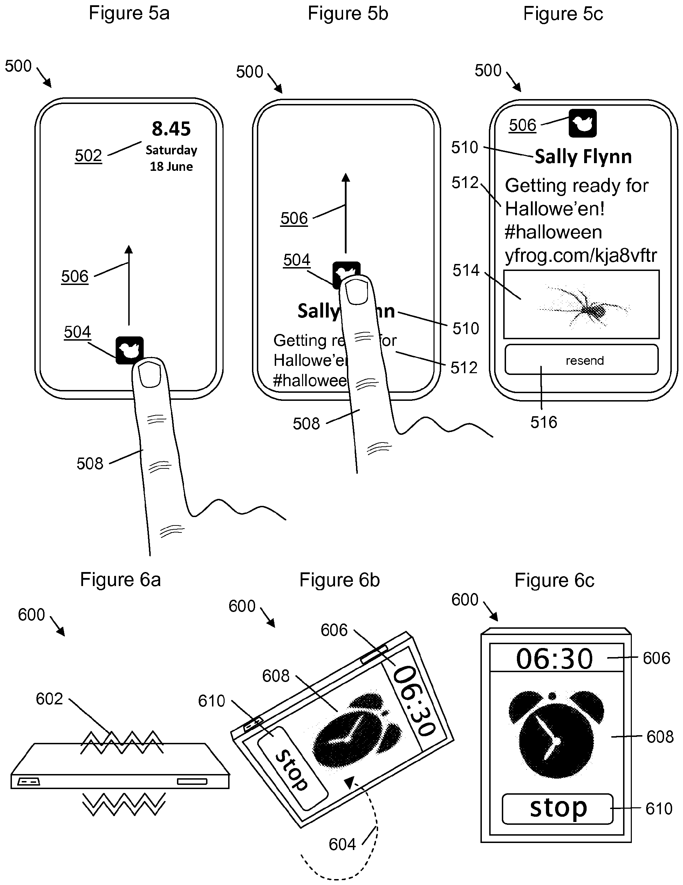

Figures 5a-c illustrate a series of views of an example embodiment with the portable electronic device (200, 500) in use in a second mode. Here the portable electronic device may, for example, be a smartphone, PDA, or tablet computer. The example shows a user looking at a message received by a third party via a microblogging site in the second mode, and provides an example of a user performing locked user interaction via a specific limited user input which has been made available due to the occurrence of an event. The event indication allows the user to provide specific limited user input using the user interface of the portable electronic device, to directly interact with associated second mode output provided using the user interface in the second mode of operation.

In figures 5a-c the device is operating in a second mode. Figure 5a shows a device displaying the time and date on screen (502), and also shows an icon (504) notifying the user that information has been received by the device from a third party (in the example the third party has a username of Sally Flynn). The appearance of this icon (504) is an indication that an event has occurred. In this example, the third party is a person who the user is linked to on a microblogging site, and the third party has posted a new microblog entry, which is the new event (indicated by the appearance of the indication icon (504)). The notification or indication (504) may alternatively comprise one or more of an icon being displayed, a vibration signal, a visual signal, an audio signal, or other notification. The occurrence of the event (receipt of a new microblog entry) triggers the availability, in the second mode, of allowing one or more specific limited user inputs so that the user may interact with the second mode output, for example to view the new microblog post.

The user wishes to view the message posted by the third party, and so in figure 5b the user performs locked user interaction, comprising the specific limited user input (now allowed due to the occurrence of the event of receiving a new microblog post) of sliding a finger along the touch sensitive screen to slide (506) the icon (504) up the screen to reveal the third party's message. This specific limited user input of sliding (506) the icon (504) reveals in figures 5b and 5c the message comprising the third party's username (510), their microblog entry (512) which itself consists of text ("Getting ready for Hallowe'en"), a hashtag (#halloween), a hyperlink (yfrog.com/kja8vftr), and an image (514), and therefore allows the user to interact with the received second more input. It will be appreciated that specific limited user input other than sliding an icon up the screen may be used, for example, tilting or rotating the device, or maintaining a longer press on the screen or other part of the device in order for the third party message to be displayed.

The user may perform locked user interaction in the second mode, for example, the user may not have the functionality in the second mode to select the hashtag and view other posts from other microbloggers who have also used the same hashtag. The user may be able to perform this interaction of selecting the hashtag if the device were operating in the first mode with general unlocked user interaction possible.

In this example, the second mode output is abbreviated with respect to corresponding first mode output, in that there is no display of a user avatar in the second mode, which there may be in the first mode. Therefore the abbreviated output may be abbreviated with respect to the number of different elements making up the message.

If the user would like to interact with the application in the second mode, in this example locked user interaction is possible; that is, they may select the "resend" button in order to directly interact with the associated second mode output (for example, to re-transmit the third party's message on the microblogging site). Other possible interactions may allow other actions, such as directly replying to the third party's message. In this example, selecting the "resend" option by performing a specific limited user input, such as a tap on the particular region of the touch screen corresponding to the button (516), would resend the message from the user's own microblogging account, so that their friends linked to them on the site may view it, while the (sending) device remains in the second operating mode. Alternatively, the user may be happy to have viewed the abbreviated content, for example as shown in figure 5c, and the user may simply put down the portable electronic device and not interact further with it at this stage. In this case the device also remains in the second mode.

It may be envisaged that after the device has recognised that the message for which a notification was provided has been viewed/seen, for example after the device registers that specific limited user input has been provided in order to display message content, the device marks that message as read/seen. Marking the message as read/seen may be, for example, via the notification icon (504) no longer being displayed. A message may also be marked as read/seen for example, if in the first or second mode a list of messages is shown with unread/unseen messages marked in bold type and read/seen messages not marked in bold type. A message which has been read/seen as in the example above with the device operating in the second mode, will be marked as read/seen in a list of messages by being displayed not in bold type. It will also be appreciated that the device may not mark the message as read after being viewed/seen while operating in the second mode, and that the user may, for example, be required to view the message in a first mode, before the device marks the message as read.

Figures 6a-c illustrate a series of views of an example embodiment with the portable electronic device (200, 600) in use in the second mode. Here the portable electronic device may, for example, be a mobile phone, smartphone, PDA, tablet computer or portable electronic device with alarm clock functionality. The example shows an alarm scheduled to sound at 06:30, and the user responding to the alarm by interacting with the portable electronic device. This is another example of a user performing locked user interaction via a specific limited user input, which is allowed because an indication of an event has been provided, thus triggering the availability of using the user interface of the portable electronic device, to directly provide specific limited user interactions and thereby interact with associated second mode output in the form of scheduled information.

In figures 6a-c the device is operating in the second mode. Figure 6a shows a device (600) face down, sounding an alarm (602). The device could alternatively be lying face up, or stood up, for example in a cradle. The alarm signal (602) could be a combination of one or more of a vibration signal, and an audio signal. The audio signal could be one or a series of tones or beeps, or could play a song or other recording. The alarm may become louder as it is sounded for a longer period of time. The alarm sound (602) forms part of the second mode output and provides an indication of an event associated with second mode output, i.e. the alarm sounding (602) while the device is operating in the second mode. The indication of the event, the alarm sounding (602) triggers the availability of, in the second mode, allowing one or more specific limited user inputs so that the user may interact with the second mode output.

In this example, the user wishes to interact with the second mode output by responding to the alarm (602) and stopping it sounding, so figure 6b shows the user flipping and rotating the device. Until this point in this example, before any user interaction with the device, no information is made available on the screen, and the only output made is to inform the user that the alarm is sounding is the sound (602).

In this example the action of flipping the device is a specific limited user input which has been made available in the second mode by the occurrence of the event (the alarm sounding). Before the event occurring, the user interaction of flipping the device would have had no effect, as this specific limited user input would not yet have been allowed. Such a situation may be considered to be the device operating in a third mode which is akin to a sleep type mode or standby-type mode. The specific limited user input in this example of flipping the device, made available by the event occurring of the alarm sounding, also stops the alarm sounding temporarily ("snoozes" the alarm). In other examples, the action of flipping the device may not snooze the alarm but may cause the alarm to become quieter, or may also cause the alarm to stop completely.

The specific limited user input of flipping the device in this example also causes the device to display information on the screen, such as the time (606), an image (608) and a button (610). Before the user interaction of flipping the device, no information was displayed on the screen. The device remains in the second mode throughout this user interaction of flipping the device. Alternatively images and other information may be displayed upon the alarm sounding, and not in response to a user interaction such as a rotate motion.

It will be appreciated that the specific limited user input need not be a flip motion, but may be a rotation, a change of position or location of the device, a tap on the screen, tapping the device against another object, shaking the device, swiping a finger or thumb across the screen, or other specific limited user input.

The time display (606) and the image (608) form abbreviated second mode output as the device is operating in the second mode. It may be envisaged that, if the device was operating in the first mode, the device may display further information such as the date, weather conditions, location of the device (via GPS functionality), a message preset by the user (such as "wake up now" or "appointment at Drs"). The device may also offer more options for general unlocked user interaction if operating in the first mode, such as setting another alarm, changing the settings of the currently sounding alarm, "snoozing" the alarm, making the alarm quieter, setting another alarm, or other options.

The user in this example has the option of performing further specific limited user input to interact with the device in a locked manner. The user may tap the "stop" button (610) to stop the alarm sounding. In other examples the user may be required to hold the "stop" button (610), or swipe it or another displayed element across the screen, in order to stop the alarm sounding. It may be envisaged that the device is configured to receive input by being bent or squeezed by the user, as the device may comprise elements which are able to detect such deformations. Therefore it may be envisaged that rather than having to flip the device, the user may squeeze the device in order to snooze the alarm, for example.

It will be appreciated that the scheduled information need not be an alarm. For example, a device may sound an alert (thereby providing an indication of an event) to inform the user that an event recorded in a calendar entry is imminent (such as a meeting due to start in 10 minutes from the alert sounding). The user may be alerted of an event by the device providing an indication of the event, such as vibrating in his or her pocket, or sounding a beep or other sound, or flashing an LED indicator in a particular colour. Until this event occurrence and associated event indicator, the user is not allowed to make specific limited user input to interact with second mode output (such as looking at the calendar in the second mode) and the device does not display any associated information on the screen to inform the user that the calendar meeting is due. This may provide an advantage to a user that they do not feel the need to regularly check their calendar (nor are they able to in the second mode in this example) and the user is aware that they cannot inadvertently alter any calendar entries by mistake while the device is operating in the second mode, since an event is required to trigger the availability of providing specific limited user inputs to view and/or interact with the associated second mode output.

Receipt of the event indication triggers the availability of providing specific limited user input, such as allowing the user to flip, shake, rotate, tap, or otherwise provide a user input to the device. On making an appropriate specific limited user input, abbreviated second mode output may be displayed due to the user input, such as showing the name of the meeting and the location. It may be imagined that the location is displayed to the user on a map. The specific limited user input may allow the user to interact with the second mode output by allowing him or her to stop the alert; the abbreviated information regarding the calendar entry may remain displayed on screen.

The user may perform a further specific limited user interaction to stop the display of the calendar entry details, such as tapping the screen, tapping a button, or swiping a finger across the screen. The user may be required to perform a more complex interaction to dismiss the calendar alert, such as entering a PIN code or confirming that he or she wished to dismiss the alarm through selecting a series of on-screen options. Alternatively the display may disappear after a predetermined period of inactivity with the device and the possibility of providing specific limited user interactions may be eliminated. After the device recognises that the information has been viewed, that is, the device has received the specific limited user input leading to display of the calendar entry details, the device in this example may mark the calendar entry alert as "seen". It may be envisaged that further, the device may no longer display the calendar entry details in the second mode after being marked as "seen". It may alternatively be envisaged that the device does not mark the calendar entry as being "seen" after being viewed in this way; it may be the case, for example, that the calendar entry is required to be seen while the device is operating in the first mode in order for an entry to be marked as seen.

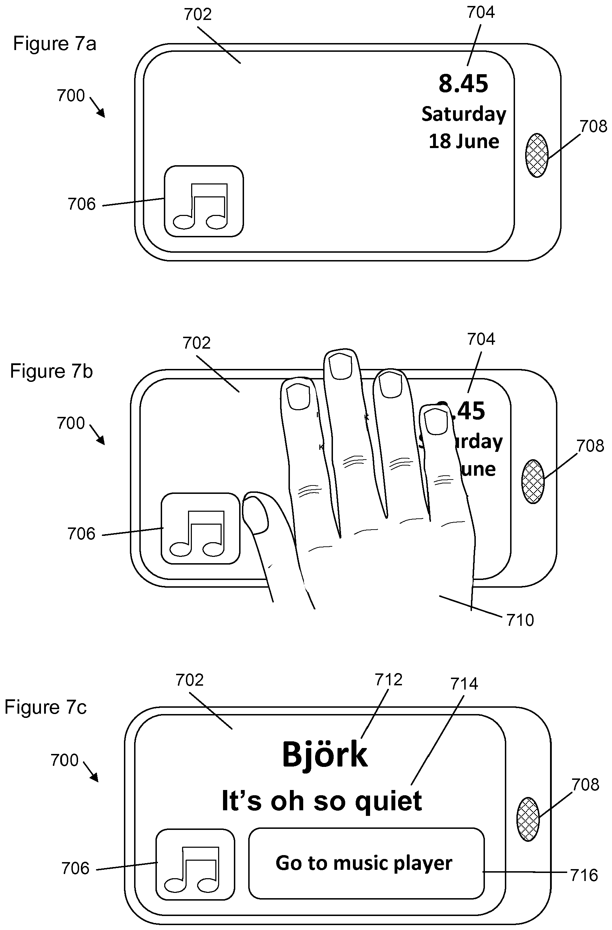

Figures 7a-c illustrate a series of views of an example embodiment with the portable electronic device (200, 700) in use in a second mode. Here the portable electronic device (700) may, for example, be a tablet computer or other portable electronic device. In this example the screen (702) of the portable electronic device is sensitive to touch and also to objects (such as a user's finger or hand (710) being located in proximity to the screen (702).

The example shows a song playing on the portable electronic device (700) in the second mode through a speaker (708). The screen (702) displays some background information (704), in this case the time and date. An icon (706) is also displayed to indicate that the device is operating and playing a song. This icon indicated the occurrence of an event, i.e., that a song is playing. It may be envisaged that the display of the background information (704) is optional. In this example, the user wishes to interact with the second mode output, and know the name of the song that is playing.

In figure 7b it may be envisaged that the device is acting as a music player and is at rest on a table or in a cradle, away from the user. The user is therefore not likely to interact with the device inadvertently by moving or touching it. It may also be envisaged that, in another embodiment, the device is acting as a personal music player and is clipped to the user's clothing or is present in the user's pocket. In this case the user may well interact with the device (by moving, rotating or tilting it, or by touching the screen or buttons) without necessarily wishing to provide any input to the device. These aspects will be discussed below.

The user in the embodiments shown in the figures 7a-c has the availability of providing specific limited user input to interact with the second mode output (the song playing) as the playing of the song along with the associated icon (706) constitutes an event which triggers the availability of allowing one or more specific limited user inputs in the second mode. In the example of the device being away/remote from the user, the user can deliberately perform user input by moving his or her hand (710) over the screen (702), and the device, which has a screen configured to be sensitive to objects in proximity, receives a specific limited user input, that of the user's hand (710) being in proximity to the screen or touching the screen (702). On receiving this specific limited user input, abbreviated output is provided, thereby the user is interacting with the second mode output (reading more information about the song playing) after providing suitable specific limited user input (moving his hand (710) over or onto the screen (702)). In the example of the device being next to the user (e.g. in a pocket), the user is only allowed to deliberately perform user input at a particular moment during the second mode output on the occurrence of an event, such as when a song is ending (for example, within 20 seconds from the end of the song), for example by moving his or her hand (710) over the screen or touching the screen (702). Other possible time windows for allowed user interaction may be envisaged. Within this allowed 20s time window of the song ending in this example, the input is recognised as being a deliberate user input rather than any accidental interaction not intended as input, and the device receives a specific limited user input, that of the user's hand (710) being in proximity to or touching the screen (702). On receiving this specific limited user input within the allowed time window of the song ending, abbreviated output is provided, thereby the user is interacting with the second mode output (reading more information about the song playing) after providing suitable specific limited user input (moving his hand (710) over the screen (702)). It will be appreciated that after performing a specific limited user interaction resulting in the user being able to see the song details, further specific limited user interactions may be possible, for example, skipping to the next song or changing the album being played. It may be understood that in the absence of any event indication, the specific limited user input of waving a hand close to the screen is not available, and therefore has no effect and no song details are displayed in the second mode.

Figure 7c shows the abbreviated output provided in response to the user's specific limited user input. The name of the artist (712) and the title of the song being played (714) are displayed on the screen (702). The output is abbreviated, since, for example, if the device was to operate in the first mode, further functionality would be available such as, for example, viewing the running time of the song, viewing the name of the recording house, the year of the album, or the cover artwork for the album. It may also be envisaged that the abbreviated output provided in the second mode comprises, for example, artwork related to the song or album being played, or other associated information.

The user has the option of performing another specific limited user input, which is that of tapping the button (716) which has also appeared in response to the user's first input of hovering above the screen (710). Tapping this button would cause the device to leave the second mode and operate in the first mode, allowing general unlocked user interaction such as, for example, viewing other albums, other songs on the album, or accessing an online music store to purchase other music.

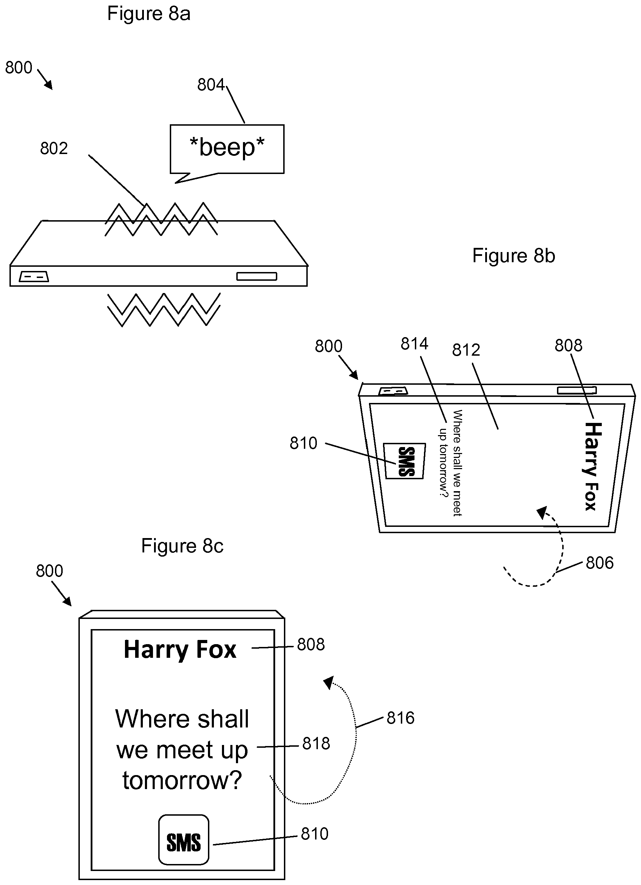

Figures 8a-c illustrate a series of views of an example embodiment with the portable electronic device (200, 800) in use in a second mode. Here the portable electronic device may, for example, be a smartphone, mobile phone or PDA. The example shows a user looking at an SMS message received from a third party in the second mode, and provides an example of a user performing locked user interaction via a specific limited user input which has been made available due to the occurrence of an event. The event indication allows the user to provide specific limited user input using the user interface of the portable electronic device, to directly interact with associated second mode output provided using the user interface in the second mode of operation. When the user provides the specific limited user input the display may change such that additional or different information relating to the SMS message is shown whilst remaining in the second mode. In both cases, the displayed information is different to that displayed in the first mode. Such a change in the display is shown by figures 8b and 8c and is described in more detail below.

In figures 8a-c the device is operating in a second mode. Figure 8a shows a device at rest in the second mode. The device may be resting on a table, or may be in a user's pocket. The device (800) is vibrating (802) and/or is playing a tone (804) to indicate that an event has occurred, that is, an SMS message has been received by the device, sent by a third party. Other notifications are also possible and included within the scope of the disclosure. The occurrence of the event (receipt of a new SMS message) triggers the availability, in the second mode, of allowing one or more specific limited user inputs so that the user may interact with the second mode output, for example to view the new SMS message.

The user wishes to see what the notification is notifying him of (he may wish to check what sort of message he has received, as he may be unsure if he has received a new SMS message, or a new e-mail, or that he has missed a call, that an alarm is sounding, or other possible event). Therefore in figure 8b the user performs locked user interaction, comprising the specific limited user input (now allowed due to the occurrence of the event of receiving an SMS message) of tilting the device (806) to have a quick look, or peek, at what event the notification (802, 804) relates to. The angle of tilt required may be small (for example at least a threshold value of between 5 and 25 degrees) in some examples, or the angle of tilt may be larger (for example, at least a threshold value of between 25 and 90 degrees, or greater) in other examples. The specific limited user input of tilting (806) the device (800) reveals in figure 8b the SMS message received, comprising the third party's name (808), and an icon to show that the message received is an SMS message (810). In figure 8b, since the user has tilted the device, the device is indicating that a new SMS message has been received (810), and from whom (808), in large letters/symbols so that the user can easily see this information on the screen. In this example, the message content (814) is displayed in small type on the screen. At least part of the screen (812) may not display information that is unrelated to the received message. It may be envisaged that in the second mode, a region of the screen (812) in figure 8b displays an image such as a background image, wallpaper, a single colour or may be blank.

In this example, in order for the user to read the message content easily, after tilting the device to see the notification, the device is configured to allow the user to rotate the device (816), thus providing specific limited user input. This rotation of the device causes the device to display the message content in large type (818) so that it may be easily read by the user. The third party's name (808) remains displayed along with an icon indicating that the message is an SMS message (810). It may be that in some examples the icon (810) is not continued to be displayed after rotation. The specific limited user input of rotating of the device as shown in this example in figure 8c allows the user to not only read the SMS message in large type, but also to interact with the received second mode output, for example by replying to the message. It will be appreciated that in some examples only a tilt user input, and not a further rotate motion of the device, may be required for the device to display the third party's message as shown in figure 8c, with the message content in large type. It will also be appreciated that rather than the device being tilted about an axis generally parallel with a longer side, and then being rotated so that the device is oriented in a "portrait" fashion (as shown in figures 8a-c), the device may operate equally well by being tilted about an axis generally parallel with a shorter side, and being rotated so that the device is oriented in a "landscape" fashion. It will also be appreciated that in some examples the tilt and/or rotate gesture may be with the device oriented in any direction, and that the magnitude of the tilt and/or rotate gesture may be smaller, or larger, depending on the particular example.

It may also be appreciated that rather than a tilt and a rotate gesture being used in the above example, other specific limited user inputs may be used. For example, turning, tilting or rotating the device by a first amount (which may be approximately 45 degrees) may cause the device to display the information as shown in figure 8b, while continuing the turn, tilt or rotation by a second amount (which may be approximately 90 degrees) will cause the device to display the information as shown in figure 8c.

In this example, the second mode output shown in both figures 8b and 8c is abbreviated with respect to corresponding first mode output. That is to say there are only certain details concerning the message displayed in the second mode. More details may be available in the second mode, such as the time and date at which the message was sent, or an image corresponding to the third party. In the first mode, the third party's name may appear in a particular style, but in the second mode, all third party names may appear in a particular predetermined style (which may itself be "low power" in some aspects such as being of a particular colour). Therefore the output in the second mode may be abbreviated with respect to the number of different elements making up the message and abbreviated with respect to the way in which information about a third party is displayed.

It will be appreciated that while the examples illustrated in figures 5a-c, figures 6a-c, figures 7a-c and figures 8a-c show information in black on a white background, the device may be configured, in the second mode, to display information in white on a black background, or display information using a low brightness or reduced contrast scheme in the second mode, in order to, for example, prolong battery life or reduce the processor activity necessary for the device to operate in the second mode. It will be appreciated that these embodiments do not necessarily need to provide for an abbreviated version of the output available in the first mode when operating in the second mode.

It will be appreciated that other example embodiments may or may not enable the reception of calls (e.g. telephone calls) whilst in the second mode. For example, an example embodiment may, in response to receiving a call, automatically change the mode of the device into the first mode from the second mode. In the first mode, the apparatus would enable general unlocked interaction with the portable electronic device for example, to accept/reject the call and interact with other applications apart from the call application, at least while the call was active. The device may then automatically return the device to the second mode upon the call being finished/rejected. Another example embodiment may enable the reception/acceptance of calls whilst remaining in the second mode of operation and thus not allow general interaction (e.g. with other applications apart from the call application) while the call is active.

It will be appreciated that other example embodiments may have further modes of operation in addition to the first and second modes of operation. For example, an example embodiment may have a third mode (e.g. a simple background mode) wherein all of the user interactions with the portable electronic device are disabled except those which enable the portable electronic device to be changed from the third mode into another mode (e.g. the first mode or the second mode). It will be appreciated that, when in a third mode, the portable electronic device may be configured to change into a second mode in response to an event (e.g. in response to receiving a message, or a scheduled calendar event).

It will be appreciated that, by providing the user with a second mode which allows only specific limited user inputs, the user may interact with the device more intuitively and easily in the second mode. In addition, it may prevent the user from making unwanted or accidental interactions with the portable electronic device whilst retaining useful functionality. It may also allow the battery life of the portable electronic device to be extended. For example, if the user wishes to perform a simple task using the device he may not need to activate the full functionality of the device to do so.

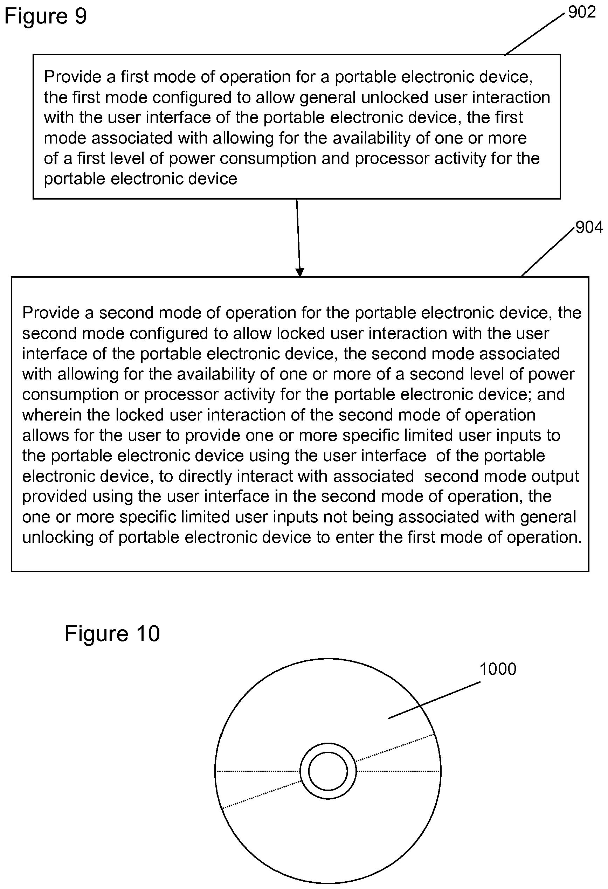

Figure 9 shows a flow diagram illustrating the operation of different modes of the portable electronic device in steps (902) and (904), and is self-explanatory.

Figure 10 illustrates schematically a computer/processor readable media 1000 providing a program according to an embodiment of the present invention. In this example, the computer/processor readable media is a disc such as a digital versatile disc (DVD) or a compact disc (CD). In other embodiments, the computer readable media may be any media that has been programmed in such a way as to carry out an inventive function.

It will be appreciated to the skilled reader that any mentioned apparatus/device and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some embodiments, a particular mentioned apparatus/device may be pre-programmed with the appropriate software to carry out desired operations, and wherein the appropriate software can be enabled for use by a user downloading a "key", for example, to unlock/enable the software and its associated functionality. Advantages associated with such embodiments can include a reduced requirement to download data when further functionality is required for a device, and this can be useful in examples where a device is perceived to have sufficient capacity to store such pre-programmed software for functionality that may not be enabled by a user.

It will be appreciated that the any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "computer" or processor described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein. The applicant indicates that the disclosed aspects/embodiments may consist of any such individual feature or combination of features. In view of the foregoing description it will be evident to a person skilled in the art that various modifications may be made within the scope of the claims.

## Claims

1. An apparatus (100, 200) comprising:
at least one processor (108); and
at least one memory (107) including computer program code,
the at least one memory (107) and the computer program code configured to, with the at least one processor (108), cause the apparatus (100, 200) to perform at least the following:
provide a first mode of operation for a portable electronic device (200, 300, 302, 300, 400, 426, 500, 600, 700, 800), the first mode configured to allow general unlocked user interaction with the user interface (105, 202, 304, 402) of the portable electronic device, the first mode associated with allowing for the availability of one or more of a first level of power consumption and processor activity for the portable electronic device;
provide a second mode of operation for the portable electronic device, the second mode configured to allow locked user interaction with the user interface of the portable electronic device, the second mode associated with allowing for the availability of one or more of a second level of power consumption or processor activity for the portable electronic device;
wherein the locked user interaction of the second mode of operation allows for the user to provide one or more specific limited user inputs to the portable electronic device using the user interface of the portable electronic device, to directly interact with associated second mode output provided using the user interface in the second mode of operation, the one or more specific limited user inputs not being associated with general unlocking of the portable electronic device to enter the first mode of operation; and
wherein the apparatus (100, 200) is configured to, in the second mode of operation, provide an indication of an event (602, 802, 804) associated with second mode output, the event being receipt of a message from a third party or a scheduled event, the occurrence of the event triggering the availability, for a predetermined period of time following the occurrence of the event, in the second mode of operation, of allowing at least one of the one or more specific limited user inputs associated with the second mode output to enable display of abbreviated second mode output for the event in response to said at least one of the one or more specific limited user inputs made within the predetermined period,
abbreviated second mode output being an abbreviated version of output for the event available in the first mode; and
the at least one of the one or more specific limited user inputs comprising moving (604, 806, 816) the portable electronic device.

2. The apparatus (100, 200) of claim 1, wherein the abbreviated second mode output comprises one or more of:
a subject of a textual message;
a first line of a textual message (322, 432, 512, 818);
part of a textual message (322, 432, 512, 818);
information identifying the sender of a textual message (320, 430, 510, 808);
an image (434, 514, 608);
a button, symbol or icon (324, 436, 516, 610, 810);
a news headline;
a direction indicator; and
a location indicator.

3. The apparatus (100, 200) of claim 1, wherein the abbreviated second mode output content comprises one or more of information received from a third party, media information, and scheduled information.

4. The apparatus (100, 200) of claim 3, wherein the information received from a third party comprises one or more of the name of the third party, a title, contact information of the third party, an avatar, a photograph of the third party, photographic content, image content, text content, audio content, a hashtag or a hyperlink.

5. The apparatus (100, 200) of claim 3, wherein the scheduled information comprises one or more of a calendar entry, an alarm, a scheduled software update, a scheduled anti-virus update, a time and date based scheduled update, or other scheduled information.

6. The apparatus (100, 200) of claim 3, wherein the media information comprises one or more of textual content, visual content or audio content of an e-book or other electronic document, songs, music, soundtracks, other audio media, videos, movies, or other visual media.

7. The apparatus (100, 200) of claim 1, wherein the specific limited user input is limited with respect to the general range of user input available in the first mode.

8. The apparatus (100, 200) of claim 1, wherein the second mode output is a low power output with respect to the output available in the first mode of operation due to being in a standby-type or sleep-type second mode.

9. The apparatus (100, 200) of claim 1, wherein the second level of the one or more of power consumption and processor activity is lower than the first level of the one or more of power consumption and processor activity for the portable electronic apparatus due to being in a standby-type or sleep-type second mode.

10. The apparatus (100, 200) of claim 1, wherein the second mode of operation allows for the user to provide specific limited user input to the portable electronic device using the user interface of the portable electronic device, to directly interact with associated output provided using the user interface in the second mode of operation, whilst keeping the portable electronic device in the second mode.

11. The apparatus (100, 200) of claim 1, wherein the locked user interactions of the second mode are locked with respect to the availability of one or more of the power source, processor and functionality of the user interface.

12. The apparatus (100, 200) of claim 1, wherein the at least one of the specific limited user inputs comprises one or more of:
tilting the device;
moving the device to a new location;
flipping the device; and
rotating the device.

13. The apparatus (100, 200) of claim 1, wherein one or more of the second level of power consumption and processor activity for the portable electronic device are temporarily higher than the first level of power consumption and processor activity for the portable electronic device during processing and/or performance of the specific limited user input and/or the function/task associated with the specific limited user input.

14. A method, the method comprising:
providing a first mode of operation for a portable electronic device (200, 300, 302, 300, 400, 426, 500, 600, 700, 800), the first mode configured to allow general unlocked user interaction with the user interface (105, 202, 304, 402) of the portable electronic device, the first mode associated with allowing for the availability of one or more of a first level of power consumption and processor activity for the portable electronic device;
providing a second mode of operation for the portable electronic device, the second mode configured to allow locked user interaction with the user interface of the portable electronic device, the second mode associated with allowing for the availability of one or more of a second level of power consumption or processor activity for the portable electronic device;
wherein the locked user interaction of the second mode of operation allows for the user to provide one or more specific limited user inputs to the portable electronic device using the user interface of the portable electronic device, to directly interact with associated second mode output provided using the user interface in the second mode of operation, the one or more specific limited user inputs not being associated with general unlocking of the portable electronic device to enter the first mode of operation; and
wherein the second mode of operation provides an indication of an event (602, 802, 804) associated with second mode output, the event being receipt of a message from a third party or a scheduled event, the occurrence of the event triggering the availability, for a predetermined period of time following the occurrence of the event, in the second mode of operation, of allowing at least one of the one or more specific limited user inputs associated with the second mode output to enable display of abbreviated second mode output for the event in response to said at least one of the one or more specific limited user inputs made within the predetermined period,
abbreviated second mode output being an abbreviated version of output for the event available in the first mode; and
the at least one of the one or more specific limited user inputs comprising moving (604, 806, 816) the portable electronic device.

15. A computer program product comprising computer program code configured to, when executed on a computer:
provide a first mode of operation for a portable electronic device (200, 300, 302, 300, 400, 426, 500, 600, 700, 800), the first mode configured to allow general unlocked user interaction with the user interface (105, 202, 304, 402) of the portable electronic device, the first mode associated with allowing for the availability of one or more of a first level of power consumption and processor activity for the portable electronic device;
provide a second mode of operation for the portable electronic device, the second mode configured to allow locked user interaction with the user interface of the portable electronic device, the second mode associated with allowing for the availability of one or more of a second level of power consumption or processor activity for the portable electronic device;
wherein the locked user interaction of the second mode of operation allows for the user to provide one or more specific limited user inputs to the portable electronic device using the user interface of the portable electronic device, to directly interact with associated second mode output provided using the user interface in the second mode of operation, the one or more specific limited user inputs not being associated with general unlocking of the portable electronic device to enter the first mode of operation; and
wherein the second mode of operation provides an indication of an event (602, 802, 804) associated with second mode output, the event being receipt of a message from a third party or a scheduled event, the occurrence of the event triggering the availability, for a predetermined period of time following the occurrence of the event, in the second mode of operation, of allowing at least one of the one or more specific limited user inputs associated with the second mode output to enable display of abbreviated second mode output for the event in response to said at least one of the one or more specific limited user inputs made within the predetermined period,
abbreviated second mode output being an abbreviated version of output for the event available in the first mode; and
the at least one of the one or more specific limited user inputs comprising moving (604, 806, 816) the portable electronic device.

## Patentansprüche

1. Einrichtung (100, 200), die Folgendes umfasst:
mindestens einen Prozessor (108); und
mindestens einen Speicher (107) einschließlich Computerprogrammcode,
wobei der mindestens eine Speicher (107) und der Computerprogrammcode, mit dem mindestens einen Prozessor (108), dazu ausgelegt sind, zu bewirken, dass die Einrichtung (100, 200) zumindest das Folgende durchführt:
Bereitstellen eines ersten Betriebsmodus für eine tragbare elektronische Vorrichtung (200, 300, 302, 300, 400, 426, 500, 600, 700, 800), wobei der erste Modus dazu ausgelegt ist, eine allgemeine entsperrte Benutzerinteraktion mit der Benutzeroberfläche (105, 202, 304, 402) der tragbaren elektronischen Vorrichtung zuzulassen, wobei der erste Modus mit dem Zulassen der Verfügbarkeit eines ersten Niveaus von Leistungsverbrauch und/oder Prozessoraktivität für die tragbare elektronische Vorrichtung assoziiert ist;
Bereitstellen eines zweiten Betriebsmodus für die tragbare elektronische Vorrichtung, wobei der zweite Modus dazu ausgelegt ist, eine gesperrte Benutzerinteraktion mit der Benutzeroberfläche der tragbaren elektronischen Vorrichtung zuzulassen, wobei der zweite Modus mit dem Zulassen der Verfügbarkeit eines zweiten Niveaus von Leistungsverbrauch und/oder Prozessoraktivität für die tragbare elektronische Vorrichtung assoziiert ist;
wobei die gesperrte Benutzerinteraktion des zweiten Betriebsmodus zulässt, dass der Benutzer eine oder mehrere spezifische eingeschränkte Benutzereingaben in die tragbare elektronische Vorrichtung unter Verwendung der Benutzeroberfläche der tragbaren elektronischen Vorrichtung bereitstellt, um direkt mit einer assoziierten Ausgabe des zweiten Modus, die unter Verwendung der Benutzeroberfläche im zweiten Betriebsmodus bereitgestellt wird, zu interagieren, wobei die eine oder die mehreren spezifischen eingeschränkten Benutzereingaben nicht mit dem allgemeinen Entsperren der tragbaren elektronischen Vorrichtung, um in den ersten Betriebsmodus einzutreten, assoziiert sind; und
wobei die Einrichtung (100, 200) im zweiten Betriebsmodus dazu ausgelegt ist, eine Indikation eines Ereignisses (602, 802, 804), das mit der Ausgabe des zweiten Modus assoziiert ist, bereitzustellen, wobei das Ereignis ein Empfang einer Nachricht von einer Drittpartei oder ein geplantes Ereignis ist, wobei das Stattfinden des Ereignisses die Verfügbarkeit, für einen vorbestimmten Zeitraum im Anschluss an das Stattfinden des Ereignisses, im zweiten Betriebsmodus, des Zulassens von mindestens einer der einen oder der mehreren spezifischen eingeschränkten Benutzereingaben, die mit der Ausgabe des zweiten Modus assoziiert sind, auslöst, um eine Anzeige einer gekürzten Ausgabe des zweiten Modus für das Ereignis als Reaktion darauf zu ermöglichen, dass die mindestens eine der einen oder der mehreren spezifischen eingeschränkten Benutzereingaben innerhalb der vorbestimmten Periode vorgenommen wird,
wobei die gekürzte Ausgabe des zweiten Modus eine gekürzte Version der Ausgabe für das Ereignis ist, die im ersten Modus zur Verfügung steht; und
wobei die mindestens eine der einen oder der mehreren spezifischen eingeschränkten Benutzereingaben ein Bewegen (604, 806, 816) der tragbaren elektronischen Vorrichtung umfasst.

2. Einrichtung (100, 200) nach Anspruch 1, wobei die gekürzte Ausgabe des zweiten Modus eines oder mehrere der Folgenden umfasst:
einen Betreff einer Textnachricht;
eine erste Zeile einer Textnachricht (322, 432, 512, 818);
einen Teil einer Textnachricht (322, 432, 512, 818) ;
Informationen, die den Absender einer Textnachricht identifizieren (320, 430, 510, 808); ein Bild (434, 514, 608);
eine Taste, ein Symbol oder ein Icon (324, 436, 516, 610, 810);
eine Schlagzeile;
einen Richtungsindikator; und
einen Standortindikator.

3. Einrichtung (100, 200) nach Anspruch 1, wobei die gekürzte Ausgabe des zweiten Modus von einer Drittpartei empfangene Informationen und/oder Medieninformationen und/oder geplante Informationen umfasst.

4. Einrichtung (100, 200) nach Anspruch 3, wobei die von einer Drittpartei empfangenen Informationen den Namen der Drittpartei und/oder einen Titel und/oder Kontaktinformationen der Drittpartei und/oder einen Avatar und/oder ein Foto der Drittpartei und/oder einen fotografischen Inhalt und/oder einen Bildinhalt und/oder einen Textinhalt und/oder einen Audioinhalt und/oder ein Hashtag und/oder einen Hyperlink umfassen.

5. Einrichtung (100, 200) nach Anspruch 3, wobei die geplanten Informationen einen Kalendereintrag und/oder einen Alarm und/oder eine geplante Softwareaktualisierung und/oder eine geplante Antivirusaktualisierung und/oder eine zeit- und datumsbasierte geplante Aktualisierung und/oder andere geplante Informationen umfassen.

6. Einrichtung (100, 200) nach Anspruch 3, wobei die Medieninformationen einen Textinhalt und/oder einen visuellen Inhalt oder Audioinhalt eines E-Books oder eines anderen elektronischen Dokuments und/oder Lieder und/oder Musik und/oder Soundtracks und/oder andere Audiomedien und/oder Videos und/oder Filme und/oder andere visuelle Medien umfassen.

7. Einrichtung (100, 200) nach Anspruch 1, wobei die spezifische eingeschränkte Benutzereingabe bezüglich des allgemeinen Umfangs einer im ersten Modus zur Verfügung stehenden Benutzereingabe eingeschränkt ist.

8. Einrichtung (100, 200) nach Anspruch 1, wobei die Ausgabe des zweiten Modus aufgrund dessen, dass sie sich in einem zweiten Modus des Standby-Typs oder Ruhezustand-Typs befindet, eine Ausgabe mit niedriger Leistung bezüglich der im ersten Betriebsmodus zur Verfügung stehenden Ausgabe ist.

9. Einrichtung (100, 200) nach Anspruch 1, wobei das zweite Niveau von Leistungsverbrauch und/oder Prozessoraktivität aufgrund dessen, dass sie sich in einem zweiten Modus des Standby-Typs oder Ruhezustand-Typs befindet, geringer als das erste Niveau von Leistungsverbrauch und/oder Prozessoraktivität für die tragbare elektronische Einrichtung ist.

10. Einrichtung (100, 200) nach Anspruch 1, wobei der zweite Betriebsmodus zulässt, dass der Benutzer eine spezifische eingeschränkte Benutzereingabe in die tragbare elektronische Vorrichtung unter Verwendung der Benutzeroberfläche der tragbaren elektronischen Vorrichtung bereitstellt, um direkt mit einer assoziierten Ausgabe, die unter Verwendung der Benutzeroberfläche im zweiten Betriebsmodus bereitgestellt wird, zu interagieren, während die tragbare elektronische Vorrichtung im zweiten Modus gehalten wird.

11. Einrichtung (100, 200) nach Anspruch 1, wobei die gesperrten Benutzerinteraktionen des zweiten Modus bezüglich der Verfügbarkeit der Leistungsquelle und/oder des Prozessors und/oder der Funktionalität der Benutzeroberfläche gesperrt sind.

12. Einrichtung (100, 200) nach Anspruch 1, wobei die mindestens eine der spezifischen eingeschränkten Benutzereingaben eines oder mehrere der Folgenden umfasst:
Neigen der Vorrichtung;
Bewegen der Vorrichtung zu einem neuen Standort;
Umdrehen der Vorrichtung; und
Drehen der Vorrichtung.

13. Einrichtung (100, 200) nach Anspruch 1, wobei das zweite Niveau von Leistungsverbrauch und/oder Prozessoraktivität für die tragbare elektronische Vorrichtung während der Verarbeitung und/oder Durchführung der spezifischen eingeschränkten Benutzereingabe und/oder der mit der spezifischen eingeschränkten Benutzereingabe assoziierten Funktion/Aufgabe temporär höher als das erste Niveau von Leistungsverbrauch und Prozessoraktivität für die tragbare elektronische Vorrichtung ist.

14. Verfahren, wobei das Verfahren Folgendes umfasst:
Bereitstellen eines ersten Betriebsmodus für eine tragbare elektronische Vorrichtung (200, 300, 302, 300, 400, 426, 500, 600, 700, 800), wobei der erste Modus dazu ausgelegt ist, eine allgemeine entsperrte Benutzerinteraktion mit der Benutzeroberfläche (105, 202, 304, 402) der tragbaren elektronischen Vorrichtung zuzulassen, wobei der erste Modus mit dem Zulassen der Verfügbarkeit eines ersten Niveaus von Leistungsverbrauch und/oder Prozessoraktivität für die tragbare elektronische Vorrichtung assoziiert ist;
Bereitstellen eines zweiten Betriebsmodus für die tragbare elektronische Vorrichtung, wobei der zweite Modus dazu ausgelegt ist, eine gesperrte Benutzerinteraktion mit der Benutzeroberfläche der tragbaren elektronischen Vorrichtung zuzulassen, wobei der zweite Modus mit dem Zulassen der Verfügbarkeit eines zweiten Niveaus von Leistungsverbrauch und/oder Prozessoraktivität für die tragbare elektronische Vorrichtung assoziiert ist;
wobei die gesperrte Benutzerinteraktion des zweiten Betriebsmodus zulässt, dass der Benutzer eine oder mehrere spezifische eingeschränkte Benutzereingaben in die tragbare elektronische Vorrichtung unter Verwendung der Benutzeroberfläche der tragbaren elektronischen Vorrichtung bereitstellt, um direkt mit einer assoziierten Ausgabe des zweiten Modus, die unter Verwendung der Benutzeroberfläche im zweiten Betriebsmodus bereitgestellt wird, zu interagieren, wobei die eine oder die mehreren spezifischen eingeschränkten Benutzereingaben nicht mit einem allgemeinen Entsperren der tragbaren elektronischen Vorrichtung, um in den ersten Betriebsmodus einzutreten, assoziiert sind; und
wobei der zweite Betriebsmodus eine Indikation eines Ereignisses (602, 802, 804), das mit der Ausgabe des zweiten Modus assoziiert ist, bereitstellt, wobei das Ereignis ein Empfang einer Nachricht von einer Drittpartei oder ein geplantes Ereignis ist, wobei das Stattfinden des Ereignisses die Verfügbarkeit, für einen vorbestimmten Zeitraum im Anschluss an das Stattfinden des Ereignisses, im zweiten Betriebsmodus, des Zulassens von mindestens einer der einen oder der mehreren spezifischen eingeschränkten Benutzereingaben, die mit der Ausgabe des zweiten Modus assoziiert sind, auslöst, um eine Anzeige einer gekürzten Ausgabe des zweiten Modus für das Ereignis als Reaktion auf die mindestens eine der einen oder der mehreren spezifischen eingeschränkten Benutzereingaben, die innerhalb der vorbestimmten Periode vorgenommen wird, zu ermöglichen,
wobei die gekürzte Ausgabe des zweiten Modus eine gekürzte Version der Ausgabe für das Ereignis ist, die im ersten Modus zur Verfügung steht; und
wobei die mindestens eine der einen oder der mehreren spezifischen eingeschränkten Benutzereingaben ein Bewegen (604, 806 ,816) der tragbaren elektronischen Vorrichtung umfasst.

15. Computerprogrammprodukt, das Computerprogrammcode umfasst, der bei Ausführung auf einem Computer ausgelegt ist zum:
Bereitstellen eines ersten Betriebsmodus für eine tragbare elektronische Vorrichtung (200, 300, 302, 300, 400, 426, 500, 600, 700, 800), wobei der erste Modus dazu ausgelegt ist, eine allgemeine entsperrte Benutzerinteraktion mit der Benutzeroberfläche (105, 202, 304, 402) der tragbaren elektronischen Vorrichtung zuzulassen, wobei der erste Modus mit dem Zulassen der Verfügbarkeit eines ersten Niveaus von Leistungsverbrauch und/oder Prozessoraktivität für die tragbare elektronische Vorrichtung assoziiert ist;
Bereitstellen eines zweiten Betriebsmodus für die tragbare elektronische Vorrichtung, wobei der zweite Modus dazu ausgelegt ist, eine gesperrte Benutzerinteraktion mit der Benutzeroberfläche der tragbaren elektronischen Vorrichtung zuzulassen, wobei der zweite Modus mit dem Zulassen der Verfügbarkeit eines zweiten Niveaus von Leistungsverbrauch und/oder Prozessoraktivität für die tragbare elektronische Vorrichtung assoziiert ist;
wobei die gesperrte Benutzerinteraktion des zweiten Betriebsmodus zulässt, dass der Benutzer eine oder mehrere spezifische eingeschränkte Benutzereingaben in die tragbare elektronische Vorrichtung unter Verwendung der Benutzeroberfläche der tragbaren elektronischen Vorrichtung bereitstellt, um direkt mit einer assoziierten Ausgabe des zweiten Modus, die unter Verwendung der Benutzeroberfläche im zweiten Betriebsmodus bereitgestellt wird, zu interagieren, wobei die eine oder die mehreren spezifischen eingeschränkten Benutzereingaben nicht mit einem allgemeinen Entsperren der tragbaren elektronischen Vorrichtung, um in den ersten Betriebsmodus einzutreten, assoziiert sind; und
wobei der zweite Betriebsmodus eine Indikation eines Ereignisses (602, 802, 804), das mit der Ausgabe des zweiten Modus assoziiert ist, bereitstellt, wobei das Ereignis ein Empfang einer Nachricht von einer Drittpartei oder ein geplantes Ereignis ist, wobei das Stattfinden des Ereignisses die Verfügbarkeit, für einen vorbestimmten Zeitraum im Anschluss an das Stattfinden des Ereignisses, im zweiten Betriebsmodus, des Zulassens von mindestens einer der einen oder der mehreren spezifischen eingeschränkten Benutzereingaben, die mit der Ausgabe des zweiten Modus assoziiert sind, auslöst, um eine Anzeige einer gekürzten Ausgabe des zweiten Modus für das Ereignis als Reaktion auf die mindestens eine der einen oder der mehreren spezifischen eingeschränkten Benutzereingaben, die innerhalb der vorbestimmten Periode vorgenommen wird, zu ermöglichen,
wobei die gekürzte Ausgabe des zweiten Modus eine gekürzte Version der Ausgabe für das Ereignis ist, die im ersten Modus zur Verfügung steht; und
wobei die mindestens eine der einen oder der mehreren spezifischen eingeschränkten Benutzereingaben ein Bewegen (604, 806 ,816) der tragbaren elektronischen Vorrichtung umfasst.

## Revendications

1. Appareil (100, 200) comprenant :
au moins un processeur (108) ; et
au moins une mémoire (107) comportant un code de programme informatique,
la ou les mémoires (107) et le code de programme informatique étant configurés, avec le ou les processeurs, pour amener l'appareil (100, 200) à effectuer au moins ce qui suit :
la fourniture d'un premier mode de fonctionnement pour un dispositif électronique portable (200, 300, 302, 300, 400, 426, 500, 600, 700, 800), le premier mode étant configuré pour permettre une interaction d'utilisateur déverrouillée générale avec l'interface utilisateur (105, 202, 304, 402) du dispositif électronique portable, le premier mode étant associé à l'activation de la disponibilité d'un premier niveau de consommation d'énergie et/ou d'une activité de processeur pour le dispositif électronique portable ;
la fourniture d'un second mode de fonctionnement pour le dispositif électronique portable, le second mode étant configuré pour permettre une interaction d'utilisateur verrouillée avec l'interface utilisateur du dispositif électronique portable, le second mode étant associé à l'activation de la disponibilité d'un second niveau de consommation d'énergie et/ou d'une activité de processeur pour le dispositif électronique portable ;
dans lequel l'interaction d'utilisateur verrouillée du second mode de fonctionnement permet à l'utilisateur de fournir une ou plusieurs entrées d'utilisateur spécifiques limitées au dispositif électronique portable à l'aide de l'interface utilisateur du dispositif électronique portable, d'interagir directement avec une sortie associée du second mode fournie à l'aide de l'interface utilisateur dans le second mode de fonctionnement, l'entrée ou les entrées d'utilisateur spécifiques limitées n'étant pas associées à un déverrouillage général du dispositif électronique portable pour entrer dans le premier mode de fonctionnement ; et
l'appareil (100, 200) étant configuré, dans le second mode de fonctionnement, pour fournir une indication d'un événement (602, 802, 804) associé à une sortie du second mode, l'événement étant la réception d'un message en provenance d'un tiers ou un événement planifié, l'apparition de l'événement déclenchant la disponibilité, pendant une période de temps prédéterminée après l'apparition de l'événement, dans le second mode de fonctionnement, d'activation d'une entrée parmi la ou les entrées d'utilisateur spécifiques limitées associées à la sortie du second mode pour permettre un affichage d'une sortie abrégée du second mode pour l'événement en réponse à ladite entrée parmi l'entrée ou les entrées d'utilisateur spécifiques limitées réalisées pendant la période prédéterminée,
une sortie abrégée du second mode étant une version abrégée d'une sortie pour l'événement disponible dans le premier mode ; et
l'au moins une entrée de l'entrée ou des entrées d'utilisateur spécifiques limitées comprenant le déplacement (604, 806, 816) du dispositif électronique portable.

2. Appareil (100, 200) selon la revendication 1, dans lequel la sortie abrégée du second mode comprend :
un sujet d'un message textuel ; et/ou
une première ligne d'un message textuel (322, 432, 512, 818) ; et/ou
une partie d'un message textuel (322, 432, 512, 818) ; et/ou
des informations identifiant l'expéditeur d'un message textuel (320, 430, 510, 808) ; et/ou
une image (434, 514, 608) ; et/ou
un bouton, un symbole ou une icône (324, 436, 516, 610, 810) ; et/ou
un titre de nouvelles ; et/ou
un indicateur de direction ; et/ou
un indicateur de localisation.

3. Appareil (100, 200) selon la revendication 1, dans lequel le contenu de sortie abrégée du second mode comprend des informations reçues d'un tiers et/ou des informations multimédias et/ou des informations planifiées.

4. Appareil (100, 200) selon la revendication 3, dans lequel les informations reçues d'un tiers comprennent le nom du tiers et/ou un titre et/ou des informations de contact du tiers et/ou un avatar et/ou une photographie du tiers et/ou un contenu photographique et/ou un contenu d'image et/ou un contenu de texte et/ou un contenu audio et/ou un mot-dièse et/ou un hyperlien.

5. Appareil (100, 200) selon la revendication 3, dans lequel les informations planifiées comprennent une entrée de calendrier et/ou une alarme et/ou une mise à jour de logiciel planifiée et/ou une mise à jour d'anti-virus planifiée et/ou une mise à jour planifiée basée sur une heure et une date et/ou d'autres informations planifiées.

6. Appareil (100, 200) selon la revendication 3, dans lequel les informations multimédias comprennent un contenu textuel et/ou un contenu visuel et/ou un contenu audio d'un livre électronique ou d'un autre document électronique et/ou des chansons et/ou de la musique et/ou des pistes son et/ou d'autres contenus multimédias audio et/ou des vidéos et/ou des films et/ou d'autres contenus multimédias visuels.

7. Appareil (100, 200) selon la revendication 1, dans lequel l'entrée d'utilisateur spécifique limitée est limitée par rapport à la portée générale d'une entrée d'utilisateur disponible dans le premier mode.

8. Appareil (100, 200) selon la revendication 1, dans lequel la sortie du second mode est une sortie de faible puissance par rapport à la sortie disponible dans le premier mode de fonctionnement en raison du fait qu'il se trouve dans un second mode du type attente ou du type veille.

9. Appareil (100, 200) selon la revendication 1, dans lequel le second niveau de consommation d'énergie et/ou d'une activité de processeur est inférieur au premier niveau de consommation d'énergie et/ou d'une activité de processeur pour le dispositif électronique portable en raison du fait qu'il se trouve dans un second mode du type attente ou du type veille.

10. Appareil (100, 200) selon la revendication 1, dans lequel le second mode de fonctionnement permet à l'utilisateur de fournir une entrée d'utilisateur spécifique limitée au dispositif électronique portable à l'aide de l'interface utilisateur du dispositif électronique portable, d'interagir directement avec une sortie associée fournie à l'aide de l'interface utilisateur dans le second mode de fonctionnement, tout en maintenant le dispositif électronique portable dans le second mode.

11. Appareil (100, 200) selon la revendication 1, dans lequel les interactions d'utilisateur verrouillée du second mode sont verrouillées par rapport à la disponibilité de la source d'énergie et/ou du processeur et/ou d'une fonctionnalité de l'interface utilisateur.

12. Appareil (100, 200) selon la revendication 1, dans lequel l'au moins une entrée de l'entrée ou des entrées d'utilisateur spécifiques limitées comprend :
l'inclinaison du dispositif ; et/ou
le déplacement du dispositif jusqu'à un nouvel emplacement ; et/ou
le retournement du dispositif ; et/ou
la rotation du dispositif.

13. Appareil (100, 200) selon la revendication 1, dans lequel le second niveau de consommation d'énergie et/ou d'une activité de processeur pour le dispositif électronique portable sont temporairement plus élevés que le premier niveau de consommation d'énergie et d'une activité de processeur pour le dispositif électronique portable pendant un traitement et/ou une performance de l'entrée d'utilisateur spécifique limitée et/ou la fonction/la tâche associée à l'entrée d'utilisateur spécifique limitée.

14. Procédé, le procédé comprenant :
la fourniture d'un premier mode de fonctionnement pour un dispositif électronique portable (200, 300, 302, 300, 400, 426, 500, 600, 700, 800), le premier mode étant configuré pour permettre une interaction d'utilisateur déverrouillée générale avec l'interface utilisateur (105, 202, 304, 402) du dispositif électronique portable, le premier mode étant associé à l'activation de la disponibilité d'un premier niveau de consommation d'énergie et/ou d'une activité de processeur pour le dispositif électronique portable ;
la fourniture d'un second mode de fonctionnement pour le dispositif électronique portable, le second mode étant configuré pour permettre une interaction d'utilisateur verrouillée avec l'interface utilisateur du dispositif électronique portable, le second mode étant associé à l'activation de la disponibilité d'un second niveau de consommation d'énergie et/ou d'une activité de processeur pour le dispositif électronique portable ;
dans lequel l'interaction d'utilisateur verrouillée du second mode de fonctionnement permet à l'utilisateur de fournir une ou plusieurs entrées d'utilisateur spécifiques limitées au dispositif électronique portable à l'aide de l'interface utilisateur du dispositif électronique portable, d'interagir directement avec une sortie associée du second mode fournie à l'aide de l'interface utilisateur dans le second mode de fonctionnement, l'entrée ou les entrées d'utilisateur spécifiques limitées n'étant pas associées à un déverrouillage général du dispositif électronique portable pour entrer dans le premier mode de fonctionnement ; et
dans lequel le second mode de fonctionnement fournit une indication d'un événement (602, 802, 804) associé à une sortie du second mode, l'événement étant la réception d'un message en provenance d'un tiers ou un événement planifié, l'apparition de l'événement déclenchant la disponibilité, pendant une période de temps prédéterminée après l'apparition de l'événement, dans le second mode de fonctionnement, d'activation d'une entrée parmi la ou les entrées d'utilisateur spécifiques limitées associées à la sortie du second mode pour permettre un affichage d'une sortie abrégée du second mode pour l'événement en réponse à ladite entrée parmi l'entrée ou les entrées d'utilisateur spécifiques limitées réalisées pendant la période prédéterminée,
une sortie abrégée du second mode étant une version abrégée d'une sortie pour l'événement disponible dans le premier mode ; et
l'au moins une entrée de l'entrée ou des entrées d'utilisateur spécifiques limitées comprenant le déplacement (604, 806, 816) du dispositif électronique portable.

15. Produit-programme d'ordinateur comprenant un code de programme d'ordinateur configuré, lorsqu'il est exécuté sur un ordinateur, pour :
fournir un premier mode de fonctionnement pour un dispositif électronique portable (200, 300, 302, 300, 400, 426, 500, 600, 700, 800), le premier mode étant configuré pour permettre une interaction d'utilisateur déverrouillée générale avec l'interface utilisateur (105, 202, 304, 402) du dispositif électronique portable, le premier mode étant associé à l'activation de la disponibilité d'un premier niveau de consommation d'énergie et/ou d'une activité de processeur pour le dispositif électronique portable ;
fournir un second mode de fonctionnement pour le dispositif électronique portable, le second mode étant configuré pour permettre une interaction d'utilisateur verrouillée avec l'interface utilisateur du dispositif électronique portable, le second mode étant associé à l'activation de la disponibilité d'un second niveau de consommation d'énergie et/ou d'une activité de processeur pour le dispositif électronique portable ;
dans lequel l'interaction d'utilisateur verrouillée du second mode de fonctionnement permet à l'utilisateur de fournir une ou plusieurs entrées d'utilisateur spécifiques limitées au dispositif électronique portable à l'aide de l'interface utilisateur du dispositif électronique portable, d'interagir directement avec une sortie associée du second mode fournie à l'aide de l'interface utilisateur dans le second mode de fonctionnement, l'entrée ou les entrées d'utilisateur spécifiques limitées n'étant pas associées à un déverrouillage général du dispositif électronique portable pour entrer dans le premier mode de fonctionnement ; et
dans lequel le second mode de fonctionnement fournit une indication d'un événement (602, 802, 804) associé à une sortie du second mode, l'événement étant la réception d'un message en provenance d'un tiers ou un événement planifié, l'apparition de l'événement déclenchant la disponibilité, pendant une période de temps prédéterminée après l'apparition de l'événement, dans le second mode de fonctionnement, d'activation d'une entrée parmi la ou les entrées d'utilisateur spécifiques limitées associées à la sortie du second mode pour permettre un affichage d'une sortie abrégée du second mode pour l'événement en réponse à ladite entrée parmi l'entrée ou les entrées d'utilisateur spécifiques limitées réalisées pendant la période prédéterminée,
une sortie abrégée du second mode étant une version abrégée d'une sortie pour l'événement disponible dans le premier mode ; et
l'au moins une entrée de l'entrée ou des entrées d'utilisateur spécifiques limitées comprenant le déplacement (604, 806, 816) du dispositif électronique portable.
